# EUROPEAN PATENT SPECIFICATION

(11) **EP 1 816 040 B1**
(45) Date of publication and mention of the grant of the patent: **10.09.2008**
(21) Application number: 06002008.8
(22) Date of filing: 01.02.2006
(51) Int. Cl.: B60R 25/04

(54) **Automobile key system**
Fahrzeugschlüsselsystem
Système de clé pour automobile

(43) Date of publication of application: 08.08.2007
(73) Proprietor: Ford Global Technologies, LLC, Dearborn, MI 48126 (US)
(72) Inventor: Jonasson, Karl, 413 06 Göteborg (SE)
(74) Representative: Valea AB

(56) References cited:
- EP-A- 1 193 145
- DE-A1- 10 164 558

## Description

### Field of the invention

The present invention relates to automobile key systems, for example to electronic automobile key systems operable to be user activated using electronic keys and operable to support selection of preferred automobile functions by actuation of automobile switches. Moreover, the present invention also relates to methods of selecting preferred automobile functions via such automobile key systems.

### Background to the invention

Automobile key systems are known for user selection of preferred automobile functions. The expression "automobile" is to be construed to relate to road vehicles; such vehicles include personal road vehicles, freight vehicles, busses, motorcycles and similar.

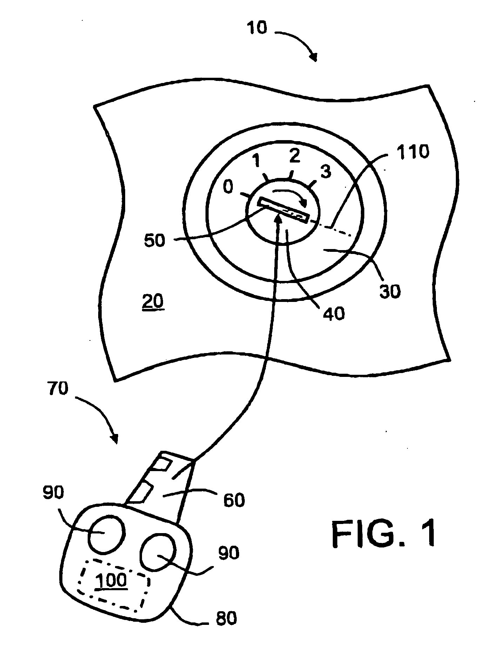

An example of a convention automobile key system is depicted, from a user's viewpoint, in Figure 1. A user accessible part of the automobile key system is indicated generally by 10. The system 10 includes a dash-board panel 20, for example a panel in front of or adjacent to a user when seated in a driver's seat within an automobile equipped with the system 10. In a region of the dash-board panel 20, there is mounted a key mechanism comprising a stationary peripheral component 30 including angular surface markers "0", "1", "2" and "3"; the markers "0", "1", "2" and "3" also relate to corresponding operating states "0", "1", "2" and "3" respectively of the automobile which will be elucidated later. The key mechanism further comprises an inner barrel component 40 including a slot 50 for receiving in operation a spatially coded blade 60 of a key indicated generally by 70. The key 70 includes a body portion 80 including one or more user push switches 90 and optionally an electronic circuit 100 therein. Optionally, the electronic circuit 100 includes one or more transducers therein, for example infer-red (IR) emitting diodes and IR detector diodes, for enabling the key 70 to be used remotely to the automobile for remotely accessing the automobile and/or for remotely locking or disabling the automobile.

When the automobile is in a locked or disabled state, the key 70 is remote from the slot 50 such that a transverse elongate axis 110 of the slot 50 is aligned with the surface marker "0" as illustrated in Figure 1. The slot 50 aligned to the surface marker "0" is representative of the automobile being immobilized and locked with its engine non-active, namely in the state "0",

When the user is desirous to unlock the automobile, to energize its engine to drive away, or to invoke one or more functions of the automobile, the user firstly gains access to an interior region of the automobile; such access can either be remotely using the one or more push switches 90 in conjunction with the electronic circuit 100 emitting radiation remotely receivable at the automobile for unlocking the automobile, or by the user physically inserting the blade 60 of the key 70 into a door lock of the automobile for gaining access. Next, the user, for example when seated in the driver's seat of the automobile, inserts the blade 60 into the slot 50 and can invoke various functions of the automobile by turning the key 70 so as to align the axis 110 with other of the surface markers, namely "1". "2" or "3''. Optionally, the system 10 is operable to apply a resilient rotational force relating to the slot 50 being rotated so that its axis 110 is aligned to the surface marker "3" corresponding to the state "3" to bias the axis 110 of the slot 50 towards the surface marker "2" corresponding to the state "2". Such resilient bias is tactile and prevents the user invoking a starter motor of the automobile for longer than necessary when starting the automobile; moreover, the resilient bias also renders it clear to users when the state "3" is invoked.

The known system 10 has several benefits. Firstly, the user is only able to select one of the surface markings "0", "1". "2" and "3" at any given instance of time, namely only one corresponding state of the automobile at any instant. Secondly, a presence of the surface markers provides the user with a visual indication of which functions of the automobile have been invoked. Thirdly, the key 70 operating In combination with the inner barrel component 40 is susceptible to providing the user with a tactile indication of a function of the automobile invoked by the user, On account of the inner barrel component 40 being specifically adapted to complement the spatial features included on the blade 60, namely arrangement of notches and slots machined therein, the system 10 is able to resist third parties with incompatible keys gaining access to functions of the automobile should such third parties be able to gain, for example by forced entry, access into an inner region of the automobile.

There is a progressive trend in automobile design to implement various automobile systems in electronic form, for example electronic engine management systems, electronic battery management systems in hybrid automobiles utilizing electric motor traction, and electronic brake control systems to mention a few examples. Contemporarily, there have been attempts to replace the key system 10 with an electronic equivalent implementation. Such an evolution is not without associated technical issues as will now be described.

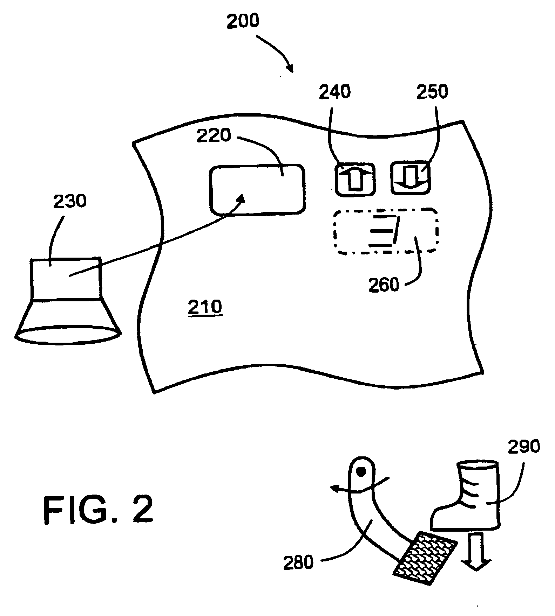

An electronic implementation of the key system 10 can be achieved as depicted in Figure 2; the electronic key system is indicated generally by 200. The system 200 includes a user-retainable key 230 which is operable to be received within a socket 220 in a dashboard panel 210 of an automobile for accessing functions of the automobile: the key 230 beneficially includes the aforesaid electronic circuit 100 or a suitable variant thereof. Instead of mechanically rotating the key 230 in such an electronic system 200, there are included one or more switches 240, 250, for example press buttons, on the dashboard panel 210. Such an implementation of the electronic key system 200 is presently substantially utilized by certain prestige automobile manufacturers. In practice, users find the system 200 unsatisfactory because, unlike the system 10, the users are not able to immediately appreciate which of the states "0", "1", "2" and "3" and associated functions of the automobile have been invoked; there is neither tactile feedback nor visual feedback regarding a state that has been invoked. One possible solution to such a deficiency is optionally to include a display 260 to provide the user with a visual indication of selected state. However, the solution introduces further issues regarding a cost of the display 260 and an area that it occupies on the dashboard panel 210. Moreover, there is a further ergonomic aspect that contemporary vehicle design favors simple dashboard panel design for safety aspects so that users are not bewildered and distracted by a vast array of automobile controls. In one implementation of the system 200, the switches can correspond to decrement and increment switches for selecting down and up the sequence of functions associated with the states "0", "1", "2" and "3". The automobile can optionally be provided with a sensor associated with a brake foot pedal or accelerator foot pedal 280 of the automobile for sensing when the pedal 280 is depressed by a foot 290 of the user. For example, the user inserting the electronic key 230 into the socket 220 of the dashboard panel 210, pressing the pedal 280 and then using the switches 240, 250 to select state "3" can be used to commence cranking and ignition in an engine of the automobile. In attaining state "3", the user is operable to depress the switches 240, 250 to progress sequentially effectively through states "0" to "1" to "2" to "3" and then back to state "2" for driving away.

Beneficially, the states "0", "1", "2" and "3" can have associated automobile functions as depicted in Table 1.

**Table 1:**

| **State, surface marker** | **Associated automobile function** |
|---|---|
| "0" | "Key in" state; in the system 10, allows extraction of the key 70 from the slot 50 or introduction of the key 70 into the slot 50 |
| "1" | "Access" state for invoking "waiting" functions of the automobile, for example infotainment, automobile interior air conditioning |
| "2" | "Ignition" state for maintaining an engine running as well as power intensive functions such as energizing headlights and tail-lights of the automobile |
| "3" | "Cranking" state for invoking cranking of the engine of the automobile, fuel supply to the engine, as well as "ignition" state functions and "access" functions; in the system 200, firstly depressing the pedal 280 and then invoking the state "3" is operable to crank and start the engine |

Despite the system 200 being susceptible to being utilized by contemporary users, it does not represent an optimal arrangement regarding simplicity of operation, simple ergonomics, efficient use of dash board area and reduced cost of implementation.

EP-A-1 193 145 (Valeo Securité Habitacle) shows an automobile key system operable to enable user access to functions of an automobile by using an sort of electronic key. The assembly has entry for a driver identification card and bistable mechanism to secure the card in a stable position corresponding to vehicle running. A separate spring loaded button provides stop/start operation through a contactor which either starts the motor and retains the identification card in the running position or stops the motor and releases the card.

DE 101 64 558 A1 (Kabushi Kaisha Tokai-Rika-Denki-Seisakusho, Aichi) shows a similar system including a push button switch. An electronic unit can be selectively user-invoked into different states (ACC, START AN).

### Summary of the invention

An object of the present invention is to provide an improved automobile key system.

According to a first aspect of the invention, there is provided an automobile key system operable to enable user access to functions of an automobile by using an electronic key, said system comprising:
(a) a socket arrangement for receiving the key;
(b) a switch arrangement for user selection of one or more functions of the automobile; and
(c) an electronic unit operable to communicate with the key and operable to be user-invoked into one or more operating states when the key is acceptable to said electronic unit,
wherein
the electronic unit is operable to be selectively user-invoked into mutually different states in response to a length of a time period during which a switch of the switch arrangement is user-depressed in operation.

The invention is of advantage in that use of the length of time the switch is depressed for differential selection of states is capable of simplifying implementation of the key system and rendering it easier for users to employ, thereby potentially increasing safety and convenience.

In the key system, the switch arrangement comprises only a single switch for user-invoking the electronic unit into the mutually different states. Use of a single switch is not only capable of simplifying dash-board panel design for ergonomic and safety reasons, but also improving ease of use of the key system to the user and also potentially reducing manufacturing cost of the automobile.

Preferably, in the automobile key system, the electronic unit is operable to be user-invoked into one or more of the following states:
(a) a first state corresponding to the key being spatially remote from said socket arrangement;
(b) a second state corresponding to the key being engaged into the socket arrangement for enabling the electronic unit to interrogate the key:
(c) a third state corresponding to the key being engaged into the socket arrangement and the electronic unit being operable to activate user-access functions of the automobile;
(d) a fourth state corresponding to the key being engaged into the socket arrangement and the electronic unit being operable to activate ignition functions of the automobile; and
(e) a fifth state corresponding to the key being engaged into the socket arrangement and the electronic unit being operable to activate engine cranking functions of the automobile for starting an engine of the automobile.
These state substantially are related to key states encountered on contemporary automobiles.

Preferably, in order to improve safety by avoiding dangerous consequences of the key being Inadvertently removed from the socket arrangement whilst the automobile is functioning, in the automobile key system, the socket arrangement is provided with one or more actuators for retaining the key in position in the socket arrangement when any one of the third, fourth and fifth states are invoked in the electronic unit and the automobile is still In a state of motion.

Preferably, in order to further improve safety, in the automobile key system, the electronic unit is operable to return to the first or second state from any one of the third, fourth and fifth states only when the automobile is in a stationary state.

Preferably, in order to circumvent a risk situation arising in an event of the key being removed from the socket arrangement whilst the automobile is non-stationary, the automatic key system is implemented such that the electronic unit is operable to render the automobile non-immobilized in an event of the key being removed from the socket arrangement whilst the automobile is in motion.

Preferably, in the automobile key system, the length of the time period during which the switch of the switch arrangement requires to be user-depressed to select the fourth state is greater than 500 milliseconds, more preferably greater than 1 second, and most preferably greater than 2 seconds. However, it will be appreciated that other durations of time period are possible but are beneficially chosen so that the user does not find the key system to be inconveniently slow in responding, for example not more than 15 seconds as a preferred maximum.

Preferably, in the automobile key system, the third state is invoked when the switch is depressed for a time period less than a threshold time period, and the fourth state is invoked when the switch is depressed for a time period greater than the threshold time period. Use of the threshold period is of benefit to unambiguously distinguish between selection of the third state and the fourth state.

In the automobile key system, the electronic unit is coupled to one or more user-depressible pedals of the automobile for sensing a state of depression of the one or more pedals, the electronic unit being operable in an event of one or more of the pedals being depressed followed by the switch being depressed to be invoked into the fifth state to cause cranking of the engine of the automobile. Preferably, the one or more user-depressible pedals include one or more of: a clutch pedal, a brake pedal, an accelerator pedal.

Preferably, in the automobile key system, the electronic unit is operable to automatically progress from the fifth state to the fourth state in response to the engine of the automobile being successfully started during ignition. Such automatic switching from the fifth state to the fourth state is capable of preventing over-use of a starter motor of the automobile, thereby potentially improving automobile operating longevity and reliability.

Preferably, as a simplification, in the automobile key system, the second and third states are combined as one state susceptible to being invoked in the electronic unit.

According to a second aspect of the invention, there is provided a method of selectively user-invoking an automobile key system into mutually different states, the system being operable to enable user access to functions of an automobile by using an electronic key, the system comprising:
(a) a socket arrangement for receiving the key;
(b) a switch arrangement for user selection of one or more functions of the automobile; and
(c) an electronic unit operable to communicate with the key and operable to be user-invoked into one or more operating states when the key is acceptable to the electronic unit,
   said states as described above the system having the possibility of
(d) user-selecting mutually different states in the electronic unit in response to a length of a time period during which a switch of the switch arrangement is depressed in operation.

Preferably, in the method, the switch arrangement comprises only a single switch for user-invoking the electronic unit into the mutually different states.

Preferably, in the method, a third state is invoked when the switch is depressed for a time period less than a threshold time period, and a fourth state is invoked when the switch is depressed for a time period greater than the threshold time period, the third state corresponding to activation of user-access functions of the automobile, and the fourth state corresponding to activation of ignition functions of the automobile

It will be appreciated that features of the invention are susceptible to being combined in any combination without departing from the scope of the invention as defined by the accompanying claims.

### Description of the diagrams

By way of example only, embodiments of the present invention will now be described with reference to the accompanying drawings wherein:
- Figure 1: is a schematic illustration of a known contemporary key system of an automobile;
- Figure 2: is a schematic illustration of a contemporary electronic equivalent implementation of the key system of Figure 1;
- Figure 3: is a schematic illustration of an automobile key system pursuant to the present invention; and
- Figure 4: is an illustration of a relationship between states of the key system illustrated in Figure 3.

### Description of embodiments of the Invention

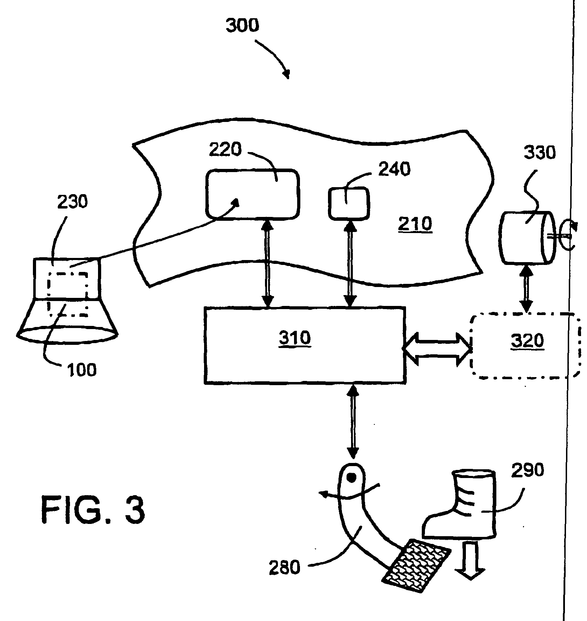

Referring to Figure 3, there is shown an embodiment from a user's view of an automobile key system according to the present invention; the key system is indicated generally by 300. The system 300 includes a region of the aforesaid automobile dashboard panel 210 provided with the aforementioned socket 220 operable to receive the electronic key 230. The system 200 is distinguished in that it includes a single switch, namely the switch 240, without any form of associated display. The system 300 further includes an electronic logic unit 310, for example implemented using computing hardware and/or dedicated application-specific logic circuits. The unit 310 is coupled in communication with the switch 240, with the socket 220 for communicating with the electronic circuit 100 of the electronic key 230, and with a control data-bus 320 of the automobile. Beneficially, the data-bus 320 caters for battery management, engine management and security management of the automobile. The data-bus 230 is, for example, coupled to a starter motor 330 of the automobile for cranking its engine when the automobile is to be started. In a similar manner to the system 200 illustrated in Figure 2, the logic unit 310 of the key system 300 is also coupled to a sensor for sensing a position of the pedal 280 actuated by the foot 290 of the user for detecting whether or not the pedal 280 is depressed in operation.

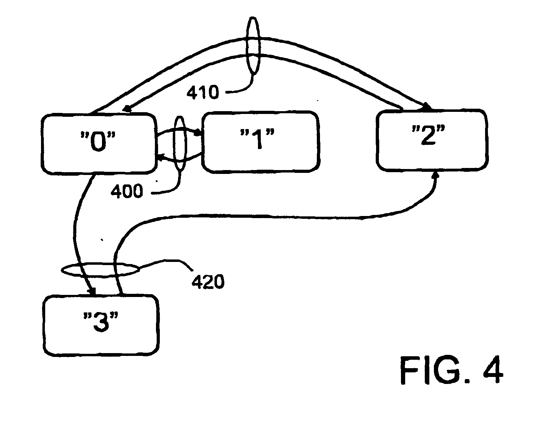

Operation of the key system 300 will now be described with reference to Figures 3 and 4. When the user inserts the electronic key 230 into the socket 220 of the dashboard panel 210, the electronic unit 310 is operable to interrogate the electronic key 230 to determine whether or not the key 230 is operable to provide identification data to the electronic unit 310 which the electronic unit 310 recognizes as being indicative of bona fide access to the automobile. In an event that the electronic unit 310 identifies the key 230 to be unauthorized, for example in a situation of a break-in into the automobile, the electronic unit 310 communicates with the data-bus 320 of the automobile to ensure that the automobile is immobilized; optionally, in such a situation, the electronic unit 310 is operable to communicate to the data-bus 320 to raise an audio and/or visual alarm. Conversely, in an event that the electronic unit 310 identifies the key 230 to be authorized and corresponding to the automobile, the electronic unit 310 is operable to switch to a state "0" as depicted in Figure 4. As elucidated in Table 1 in the foregoing, the state "0" corresponds to a "key in" situation, namely akin to the key 70 being inserted into the slot 50 in the system 10 depicted in Figure 1.

When the state "0" is established as depicted in Figure 4, the user briefly depresses the switch 240 for a relatively short period to invoke the electronic unit 310 to switch to the state "1", namely to the "access" state as elucidated in the aforesaid Table 1. When the electronic unit 310 has attained the state "1", the user is able to depress the switch again 240 for a substantially similar relatively short period for causing the electronic unit 310 to be operable to switch from being in the state "1" back to the state "0". The short period is preferably not more than 2 seconds, more preferably not more than 1 second, and most preferably not more than 500 milliseconds. A change of states of the electronic unit 310 associated with the relatively short period of depression of the switch 240 is denoted by 400 in Figure 4. When the state "1" has been selected by the user by depressing the switch 240 for the short period, the user can then subsequently invoke the state "2" from the state "1" in the electronic unit 310 by depressing the switch 240 for a relatively long period; the relatively long period will be further elucidated below.

Moreover, when the state "0" is established as depicted in Figure 4, the user depresses the switch 240 for a relatively long period to invoke the electronic unit 310 to switch to the state "2", namely to the "ignition" state as elucidated in the aforesaid Table 1. If the user depresses the switch again 240 for a substantially similar long period, the electronic unit 310 is operable to switch from being in the state "2" back to the state "0". Optionally, the user can depress the switch 240 for the relatively short period or the relatively long period to cause the electronic unit 310 to return back to assume the state "0". A change of states of the electronic unit 310 associated with the relatively long period of depression of the switch 240 is identified by 410 in Figure 4. The relatively long period is preferably complementary to the aforesaid relatively period. Moreover, the relatively long period is preferably more than 500 milliseconds, more preferably more than 1 second and most preferably more than 2 seconds.

Furthermore, when the state "0" is established as depicted in Figure 4, the user employs his/her foot 290 to depress the pedal 280 and, whilst the pedal 280 is depressed, then depresses the switch 240 to cause the electronic unit 310 to assume the state "3" as provided in Table 1 to initiate cranking of the engine of the automobile. On detection of successful ignition of the engine, the electronic unit 310 is operable, preferably automatically without intervention of the user, to switch to the state "2" to sustain running of the engine. Subsequent removal of the key from the socket 220 or subsequent depression of the switch 240 is operable to cause the electronic unit 310 to assume state "0"; however, in order to reduce a risk of the automobile being immobilized in dangerous circumstances, for example a child seated in a front seat of the automobile adjacent to the user inadvertently removes the key 230 or depresses the switch 240 in a situation of motorway, turnpike or highway driving, the electronic unit 310 is preferable operable to check that the automobile is stationary before progressing to state "0".

Optionally, the state "3" can be invoked by the user from one or more of the states "1" or "2" by depressing the pedal 280 and, whilst the pedal 280 is depressed, depressing the switch 240.

Optionally, the electronic unit 310 is configurable so that the user can depress the switch 240 to invoke from the state "2" any one of states "0" or "1" in a situation when the automobile is moving; in such a situation, removal of the key 230 is prevented and the automobile is not immobilized.

Optionally, the socket 220 is provided with a solenoid actuator operable to lock the key 230 into position into the socket 220 to resist user removal therefrom when the electronic unit 310 is operable to be in any of the states "1", "2" and "3"; such a manner of operation with regard to key retention is more akin to a behavior of the system 10 illustrated in Figure 1 as elucidated in the foregoing. Transition of the electronic unit 310 to and from the cranking state "3" is denoted by 420 in Figure 4.

In fault situations wherein the engine of the automobile is unable to function correctly, for example in fuel supply fail situation or a crank shaft mechanical fail situation, it is optionally desirable to tow the automobile away for repair. When such an event occurs, it is desirable that the electronic unit 310 can be user-set to the state "2" as elucidated in the foregoing so that lights of the automobile, for example front headlamps and rear tail lights, are lit during towing for safety purposes. The system 300 is capable of supporting such operation during towing by way of the switch 240 being user-depressed as described in the foregoing for the aforesaid relatively long period to select the state "2".

Modifications to embodiments of the invention described in the foregoing are possible without departing from the scope of the invention as defined by the accompanying claims.

The system 300 is susceptible to being simplified by effectively combining states "0" and "1" so that an act of inserting the key 230 into the socket 220 can be operable to invoke the state "1" in the electronic unit 310 whereas removal of the key 230 invokes state "0" which is preferably of sufficiently low power consumption so as not to drain a battery of the automobile over an idle period of several months. In such a combined state situation, depressing the switch 240 without the pedal 280 being depressed invokes the state "2" whereas depressing of the pedal 280 followed by depressing the switch 240 is operable to invoke the state "3"; the electronic unit 310 is preferable automatically operable to change from the state "3" to the state "2" on successful activation of the engine of the automobile.

Alternatively, or additionally, the system 300 is susceptible to being simplified to dispense with the state "1" and to allocate its associated functions either to the state "0" or to the state "2": for example, infotainment and air-conditioning functions can be rendered available to the user within the automobile irrespective of whether or not the key 230 is installed in the socket 220.

Optionally, the single switch 240 is supplemented with a simple form of display, for example an alpha-numerical display or simply one or more incandescent lamps, light emitting diodes (LEDs) or similar installed within or around the switch 240; the display is operable to provide at least a very simple form of indication indicative of which state the electronic unit 310 has attained in operation.

Expressions such as "including", "comprising", "incorporating", "consisting of, "have", "is" used to describe and claim the present invention are intended to be construed in a non-exclusive manner, namely allowing for items, components or elements not explicitly described also to be present. Reference to the singular is also to be construed to relate to the plural.

Numerals included within parentheses in the accompanying claims are intended to assist understanding of the claims and should not be construed in any way to limit subject matter claimed by these claims.

## Claims

1. An automobile key system (300) operable to enable user access to functions of an automobile by using an electronic key (230), said system (300) comprising:
(a) a socket arrangement (220) for receiving the key (230);
(b) a switch arrangement (240) for user selection of one or more functions of the automobile; and
(c) an electronic unit (310) operable to communicate with said key (230) and operable to be user-invoked into one or more operating states when said key (230) is acceptable to said electronic unit (310),
**characterised in that**
said electronic unit (310) is operable to be selectively user-invoked into mutually different states in response to a length of a time period during which a switch (240) of said switch arrangement (240) is user-depressed in operation,
said states comprising
(a) a first state corresponding to the key (230) being spatially remote from said socket arrangement (220);
(b) a second state corresponding to the key (230) being engaged into said socket arrangement (220) for enabling the electronic unit (310) to interrogate said key (230);
(c) a third state corresponding to the key (230) being engaged into said socket arrangement (220) and the electronic unit (310) being operable to activate user-access functions of the automobile;
(d) a fourth state corresponding to the key (230) being engaged into said socket arrangement (220) and the electronic unit (310) being operable to activate ignition functions of the automobile; and
(e) a fifth state corresponding to the key (230) being engaged into said socket arrangement (220) and the electronic unit (310) being operable to active engine cranking functions of the automobile for starting an engine of the automobile.
the electronic unit (310) being coupled to one or more user-depressible pedals of said automobile for sensing a state of depression of said one or more pedals (280), said electronic unit (310) being operable in an event of one or more of said pedals (280) being depressed followed by said switch (240) being depressed to be invoked into said fifth state to cause cranking of said engine of said automobile.

2. An automobile key system (300) as claimed in claim 1, wherein the switch arrangement (240) comprises only a single switch (240) for user-invoking the electronic unit (310) into said mutually different states.

3. An automobile key system (300) as claimed in claim 1, wherein the socket arrangement (220) is provided with one or more actuators for retaining the key (230) in position in the socket arrangement (220) when any one of the third, fourth and fifth states are invoked in the electronic unit (310) and the automobile is still in a state of motion.

4. An automobile key system (300) as claimed in claim 3, wherein the electronic unit (310) is operable to return to the first or second state from any one of the third, fourth and fifth states only when the automobile is in a stationary state.

5. An automobile key system (300) as claimed in claim 1, wherein the electronic unit (310) is operable to render the automobile non-immobilized in an event of the key (230) being removed from the socket arrangement (220) whilst the automobile is in motion.

6. An automobile key system (300) as claimed in claim 1, wherein the length of said time period during which the switch (240) of the switch arrangement (240) requires to be user-depressed to select said fourth state is greater than 500 milliseconds, more preferably greater than 1 second, and most preferably greater than 2 seconds.

7. An automobile key system (300) as claimed in claim 1, wherein said third state is invoked when said switch (240) is depressed for a time period less than a threshold time period, and said fourth state is invoked when said switch (240) is depressed for a time period greater than said threshold time period.

8. An automobile key system (300) as claimed in claim 1, wherein said one or more user-depressable pedals include one or more of: a clutch pedal, a brake pedal, an accelerator pedal.

9. An automobile key system (300) as claimed in claim 1, wherein said electronic unit (310) is operable to automatically progress from said fifth state to said fourth state in response to said engine of said automobile being successfully started during ignition.

10. An automobile key system (300) as claimed in claim 1, wherein said second and third states are combined as one state susceptible to being invoked in the electronic unit (310).

11. A method of selectively user-invoking an automobile key system (300) into mutually different states, said system (300) being operable to enable user access to functions of an automobile by using an electronic key (230), said system (300) comprising:
a socket arrangement (220) for receiving the key (230);
a switch arrangement (240) for user selection of one or more functions of the automobile; and
an electronic unit (310) operable to communicate with said key (230) and operable to be user-invoked into one or more operating states when said key (230) is acceptable to the electronic unit (310),
said method including the step of user-selecting mutually different states in said electronic unit (310) in response to a length of a time period during which a switch (240) of said switch arrangement (240) is depressed in operation,
said states comprising:
(a) a first state corresponding to the key (230) being spatially remote from said socket arrangement (220);
(b) a second state corresponding to the key (230) being engaged into said socket arrangement (220) for enabling the electronic unit (310) to interrogate said key (230);
(c) a third state corresponding to the key (230) being engaged into said socket arrangement (220) and the electronic unit (310) being operable to activate user-access functions of the automobile;
(d) a fourth state corresponding to the key (230) being engaged into said socket arrangement (220) and the electronic unit (310) being operable to activate ignition functions of the automobile; and
(e) a fifth state corresponding to the key (230) being engaged into said socket arrangement (220) and the electronic unit (310) being operable to active engine cranking functions of the automobile for starting an engine of the automobile,
**characterized in that** said method includes the steps of
a) depressing one or more user-depressible pedals of said automobile
b) sensing a state of depression of said one or more pedals (280)
c) depressing a switch (240) of said switch arrangement (240)
d) letting said electronic unit (310) be operable to be invoked into said fifth state to cause cranking of said engine of said automobile, if step a) was followed by step c)

12. A method as claimed in claim 11, wherein the switch arrangement (240) comprises only a single switch (240) for user-invoking the electronic unit (310) into said mutually different states.

13. A method as claimed in claim 11 or 12, wherein a third state is invoked when said switch (240) is depressed for a time period less than a threshold time period, and a fourth state is invoked when said switch (240) is depressed for a time period greater than said threshold time period, said third state corresponding to activation of user-access functions of the automobile, and said fourth state corresponding to activation of ignition functions of the automobile

## Patentansprüche

1. Ein Fahrzeugschlüsselsystem (300), das so betätigt werden kann, dass es Nutzerzugang zu Funktionen eines Fahrzeuges durch Nutzung eines elektronischen Schlüssels (230) gewährt, wobei dieses System (300) umfasst:
(a) eine Buchsenanordnung (220) zum Aufnehmen des Schlüssels (230),
(b) eine Schalteranordnung (240) zum Anwählen einer oder mehrerer Funktionen des Fahrzeugs durch den Nutzer, und
(c) eine elektronische Einheit (310), die so betreibbar ist, dass sie mit dem Schlüssel (230) kommuniziert und durch den Nutzer in verschiedene Betriebszustände versetzt werden kann, wenn der Schlüssel (230) durch die elektronische Einheit (310) akzeptierbar ist,
**dadurch gekennzeichnet, dass** die elektronische Einheit (310) so betreibbar ist, dass sie vom Nutzer wahlweise in sich von einander unterscheidende Zustände versetzt werden kann, abhängig von einer Länge eines Zeitabschnitts, während welchem ein Schalter (240) der oben genannten Schalteranordnung (240) im Betrieb durch den Nutzer gedrückt wird,
wobei diese Zustände umfassen:
(a) einen ersten Zustand, in dem der Schlüssel (230) räumlich von der Buchsenanordnung (220) entfernt ist,
(b) einen zweiten Zustand, in dem der Schlüssel (230) mit der Buchsenanordnung (220) in Eingriff steht, um der elektronischen Einheit (310) das Abfragen des Schlüssels (230) zu ermöglichen,
(c) einen dritten Zustand, in dem der Schlüssel (230) mit der Buchsenanordnung (220) in Eingriff steht und die elektronische Einheit (310) betreibbar ist, um dem Nutzer zugängliche Funktionen des Fahrzeugs zu aktivieren,
(d) einen vierten Zustand, in dem der Schlüssel (230) mit der Buchsenanordnung (220) in Eingriff steht und die elektronische Einheit (310) betreibbar ist, um Zündungsfunktionen des Fahrzeugs zu aktivieren, und
(e) einen fünften Zustand, in dem der Schlüssel (230) mit der Buchsenanordnung (220) in Eingriff steht und die elektronische Einheit (310) betreibbar ist, um Motoranlasserfunktionen des Fahrzeugs zum Starten des Fahrzeugmotors zu aktivieren,
und wobei die elektronische Einheit (310) mit einem oder mehreren durch Druck des Nutzers betätigbaren Pedalen (280) des Fahrzeugs verbunden ist, um den Druckzustand des oder der Pedale (280) zu erkennen, wobei die elektronische Einheit (310) betreibbar ist, um in den fünften Zustand versetzt zu werden und damit den Motor des Fahrzeugs anzulassen, falls eines oder mehrere Pedale (280), gefolgt von genanntem Schalter (240), gedrückt werden.

2. Ein Fahrzeugschlüsselsystem (300) nach Anspruch 1, **dadurch gekennzeichnet, dass** die Schalteranordnung (240) nur einen einzigen Schalter (240) zum Versetzen der elektronischen Einheit (310) in die genannten unterschiedlichen Zustände durch den Nutzer umfasst.

3. Ein Fahrzeugschlüsselsystem (300) nach Anspruch 1, **dadurch gekennzeichnet, dass** die Buchsenanordnung (220) mit einem oder mehreren Aktuatoren versehen ist, die den Schlüssel (230) in der Buchsenanordnung (220) festhalten, wenn einer der dritten, vierten oder fünften Zustände in der elektronischen Einheit (310) aufgerufen wird und das Fahrzeug noch in einem Bewegungszustand ist.

4. Ein Fahrzeugschlüsselsystem (300) nach Anspruch 3, **dadurch gekennzeichnet, dass** die elektronische Einheit (310) nur betätigbar ist, um aus jedem der dritten, vierten oder fünften Zustände in den ersten oder zweiten Zustand zurückzukehren, wenn das Fahrzeug stillsteht.

5. Ein Fahrzeugschlüsselsystem (300) nach Anspruch 1, **dadurch gekennzeichnet, dass** die elektronische Einheit (310) in der Lage ist, das Fahrzeug nicht zu immobilisieren, für den Fall, dass der Schlüssel (230) aus der Buchsenanordnung (220) entfernt wird, während das Fahrzeug in Bewegung ist.

6. Ein Fahrzeugschlüsselsystem (300) nach Anspruch 1, **dadurch gekennzeichnet, dass** die Länge des Zeitabschnitts, während welchem der Schalter (240) der Schalteranordnung (240) durch den Nutzer gedrückt werden muss, um den vierten Zustand anzuwählen, größer als 500 Millisekunden ist, bevorzugter Weise mehr als eine Sekunde und in der am meisten zu bevorzugenden Version größer als zwei Sekunden ist.

7. Ein Fahrzeugschlüsselsystem (300) nach Anspruch 1, **dadurch gekennzeichnet, dass** der dritte Zustand aufgerufen wird, wenn der Schalter (240) während einer Zeitspanne gedrückt wird, die kürzer als eine Grenzwertzeit ist, und der vierte Zustand aufgerufen wird, wenn der Schalter (240) während einer Zeitspanne gedrückt wird, die länger als besagte Grenzwertzeit ist.

8. Ein Fahrzeugschlüsselsystem (300) nach Anspruch 1, **dadurch gekennzeichnet, dass** das eine oder die mehreren Pedale eines oder mehrere der folgenden umfassen: ein Kupplungspedal, ein Bremspedal, ein Gaspedal.

9. Ein Fahrzeugschlüsselsystem (300) nach Anspruch 1, **dadurch gekennzeichnet, dass** die elektronische Einheit (310) so betreibbar ist, dass sie als Reaktion auf den erfolgreichen Start des Motors des Fahrzeugs während der Zündung automatisch vom fünften in den vierten Zustand weiterschaltet.

10. Ein Fahrzeugschlüsselsystem (300) nach Anspruch 1, **dadurch gekennzeichnet, dass** der zweite und der dritte Zustand zu einem Zustand kombiniert werden, der für die Anwahl in der elektronischen Einheit (310) infrage kommt.

11. Ein Verfahren zum wahlweisen Versetzen eines Fahrzeugschlüsselsystems (300) in voneinander verschiedene Zustände durch den Nutzer, das so betätigt werden kann, dass es Nutzerzugang zu Funktionen eines Fahrzeuges durch Nutzung eines elektronischen Schlüssels (230) gewährt, wobei das System (300) umfasst:
eine Buchsenanordnung (220) zum Aufnehmen des Schlüssels (230),
eine Schalteranordnung (240) zum Anwählen einer oder mehrerer Funktionen des Fahrzeugs durch den Nutzer, und
eine elektronische Einheit (310), die so betreibbar ist, dass sie mit dem Schlüssel (230) kommuniziert und durch den Nutzer in verschiedene Betriebszustände versetzt werden kann, wenn der Schlüssel (230) durch die elektronische Einheit (310) akzeptierbar ist,
wobei das Verfahren den Schritt des Auswählens von sich von einander unterscheidenden Zuständen in der elektronischen Einheit (310) abhängig von einer Länge eines Zeitabschnitts, während welchem ein Schalter (240) der oben genannten Schalteranordnung (240) im Betrieb durch den Nutzer gedrückt wird, beinhaltet,
wobei diese Zustände umfassen:
(a) einen ersten Zustand, in dem der Schlüssel (230) räumlich von der Buchsenanordnung (220) entfernt ist,
(b) einen zweiten Zustand, in dem der Schlüssel (230) mit der Buchsenanordnung (220) in Eingriff steht, um der elektronischen Einheit (310) das Abfragen des Schlüssels (230) zu ermöglichen,
(c) einen dritten Zustand, in dem der Schlüssel (230) mit der Buchsenanordnung (220) in Eingriff steht und die elektronische Einheit (310) betreibbar ist, um dem Nutzer zugängliche Funktionen des Fahrzeugs zu aktivieren,
(d) einen vierten Zustand, in dem der Schlüssel (230) mit der Buchsenanordnung (220) in Eingriff steht und die elektronische Einheit (310) betreibbar ist, um Zündungsfunktionen des Fahrzeugs zu aktivieren, und
(e) einen fünften Zustand, in dem der Schlüssel (230) mit der Buchsenanordnung (220) in Eingriff steht und die elektronische Einheit (310) betreibbar ist, um Motoranlasserfunktionen des Fahrzeugs zum Starten des Fahrzeugmotors zu
aktivieren,
**dadurch gekennzeichnet, dass** das Verfahren folgende Schritte enthält:
a) Drücken eines oder mehrerer durch den Nutzer zu betätigender Pedale des Fahrzeugs
b) Erkennen eines Zustandes des Gedrücktseins von einem oder mehreren Pedalen (280)
c) Drücken eines Schalters (240) der oben genannten Schalteranordnung (240)
d) Zulassen des Versetzens der elektronischen Einheit (310) in den fünften Zustand, um das Anlassen des Fahrzeugmotors zu bewirken, falls Schritt a) von Schritt c) gefolgt wurde.

12. Ein Verfahren nach Anspruch 11, **dadurch gekennzeichnet, dass** die Schalteranordnung (240) nur einen einzigen Schalter (240) zum Versetzen der elektronischen Einheit (310) in die genannten unterschiedlichen Zustände durch den Nutzer umfasst.

13. Ein Verfahren nach einem der Ansprüche 11 oder 12, **dadurch gekennzeichnet, dass** ein dritter Zustand aufgerufen wird, wenn der Schalter (240) während einer Zeitspanne gedrückt wird, die kürzer als eine Grenzwertzeit ist, und ein vierter Zustand aufgerufen wird, wenn der Schalter (240) während einer Zeitspanne gedrückt wird, die länger als die Grenzwertzeit ist, wobei der dritte Zustand der Aktivierung von Nutzerzugangsfunktionen des Fahrzeugs entspricht und der vierte Zustand der Aktivierung von Zündungsfunktionen des Fahrzeugs entspricht.

## Revendications

1. Système de clef pour automobile (300) actionnable pour permettre à un utilisateur d'accéder à des fonctions d'une automobile en utilisant une clef électronique (230), ledit système (300) comprenant :
(a) un agencement de douille à clef (220) destiné à recevoir la clef (230) ;
(b) un agencement d'interrupteur (240) pour la sélection par l'utilisateur d'une ou plusieurs fonctions de l'automobile ; et
(c) une unité électronique (310) actionnable pour communiquer avec ladite clef (230) et actionnable pour être mise par l'utilisateur dans un ou plusieurs états de fonctionnement lorsque ladite clef (230) est acceptable pour ladite unité électronique (310),
**caractérisé en ce que**
ladite unité électronique (310) est actionnable pour être mise de façon sélective par l'utilisateur dans des états mutuellement différents en réponse à une longueur d'une période au cours de laquelle l'utilisateur appuie sur un interrupteur (240) dudit agencement d'interrupteur (240) durant le fonctionnement,
lesdits états comprenant :
(a) un premier état correspondant à la clef (230) éloignée de façon spatiale dudit agencement de douille à clef (220) ;
(b) un deuxième état correspondant à la clef (230) engagée dans ledit agencement de douille à clef (220) pour permettre à l'unité électronique (310) d'interroger ladite clef (230) ;
(c) un troisième état correspondant à la clef (230) engagée dans ledit agencement de douille à clef (220) et à l'unité électronique (310) actionnable pour activer des fonctions d'accès par l'utilisateur de l'automobile ;
(d) un quatrième état correspondant à la clef (230) engagée dans ledit agencement de douille à clef (220) et à l'unité électronique (310) actionnable pour activer des fonctions d'allumage de l'automobile ; et
(e) un cinquième état correspondant à la clef (230) engagée dans ledit agencement de douille à clef (220) et à l'unité électronique (310) actionnable pour activer des fonctions de mise en marche de moteur de l'automobile pour démarrer un moteur de l'automobile,
l'unité électronique (310) étant couplée à une ou plusieurs pédales de ladite automobile, sur lesquelles l'utilisateur peut appuyer, pour détecter un état dans lequel l'on appuie sur ladite ou desdites pédales (280), ladite unité électronique (310) étant actionnable lorsque l'on appuie sur une ou plusieurs desdites pédales (280), et puis lorsque l'on appuie sur ledit interrupteur (240) pour la mettre dans ledit cinquième état pour entraîner la mise en marche dudit moteur de ladite automobile.

2. Système de clef pour automobile (300) selon la revendication 1, dans lequel l'agencement d'interrupteur (240) comprend seulement un interrupteur unique (240) pour que l'utilisateur mette l'unité électronique (310) dans lesdits états mutuellement différents.

3. Système de clef pour automobile (300) selon la revendication 1, dans lequel l'agencement de douille (220) est pourvu d'un ou de plusieurs actionneurs pour maintenir la clef (230) en position dans l'agencement de douille (220) lorsque l'unité électronique (310) est mise dans l'un quelconque des troisième, quatrième et cinquième états et l'automobile est toujours dans un état de mouvement.

4. Système de clef pour automobile (300) selon la revendication 3, dans lequel l'unité électronique (310) est actionnable pour retourner au premier ou au deuxième état à partir de l'un quelconque des troisième, quatrième et cinquième états seulement lorsque l'automobile est dans un état stationnaire.

5. Système de clef pour automobile (300) selon la revendication 1, dans lequel l'unité électronique (310) est actionnable pour rendre l'automobile non immobilisée lorsque la clef (230) est retirée de l'agencement de douille (220) alors que l'automobile est en mouvement.

6. Système de clef pour automobile (300) selon la revendication 1, dans lequel la longueur de ladite période au cours de laquelle l'utilisateur doit appuyer sur l'interrupteur (240) de l'agencement d'interrupteur (240) pour sélectionner ledit quatrième état est supérieure à 500 millisecondes, de façon davantage préférée supérieure à 1 seconde, et de façon préférée entre toutes supérieure à 2 secondes.

7. Système de clef pour automobile (300) selon la revendication 1, dans lequel ledit troisième état est sélectionné lorsque l'on appuie sur ledit interrupteur (240) pendant une période inférieure à une période seuil, et ledit quatrième état est sélectionné lorsque l'on appuie sur ledit interrupteur (240) pendant une période supérieure à ladite période seuil.

8. Système de clef pour automobile (300) selon la revendication 1, dans lequel ladite ou lesdites pédales sur lesquelles l'utilisateur peut appuyer comprennent une ou plusieurs parmi : une pédale d'embrayage, une pédale de frein, une pédale d'accélérateur.

9. Système de clef pour automobile (300) selon la revendication 1, dans lequel ladite unité électronique (310) est actionnable pour progresser automatiquement dudit cinquième état audit quatrième état en réponse audit démarrage réussi du moteur de ladite automobile au cours de l'allumage.

10. Système de clef pour automobile (300) selon la revendication 1, dans lequel lesdits deuxième et troisième états sont associés sous forme d'état unique susceptible d'être sélectionné dans l'unité électronique (310).

11. Procédé consistant à mettre de façon sélective, par l'intermédiaire d'un utilisateur, un système de clef pour automobile (300) dans des états mutuellement différents, ledit système (300) étant actionnable pour permettre à l'utilisateur d'accéder à des fonctions d'une automobile en utilisant une clef électronique (230), ledit système (300) comprenant :
un agencement de douille à clef (220) destiné à recevoir la clef (230) ;
un agencement d'interrupteur (240) pour la sélection par l'utilisateur d'une ou plusieurs fonctions de l'automobile ; et
une unité électronique (310) actionnable pour communiquer avec ladite clef (230) et actionnable pour être mise par l'utilisateur dans une ou plusieurs états de fonctionnement lorsque ladite clef (230) est acceptable pour l'unité électronique (310),
ledit procédé comprenant l'étape consistant à sélectionner, par l'utilisateur, des états mutuellement différents dans ladite unité électronique (310) en réponse à une longueur d'une période au cours de laquelle l'on appuie sur un interrupteur (240) dudit agencement d'interrupteur (240) durant le fonctionnement,
lesdits états comprenant :
(a) un premier état correspondant à la clef (230) éloignée de façon spatiale dudit agencement de douille à clef (220) ;
(b) un deuxième état correspondant à la clef (230) engagée dans ledit agencement de douille à clef (220) pour permettre à l'unité électronique (310) d'interroger ladite clef (230) ;
(c) un troisième état correspondant à la clef (230) engagée dans ledit agencement de douille à clef (220) et à l'unité électronique (310) actionnable pour activer des fonctions d'accès par l'utilisateur de l'automobile ;
(d) un quatrième état correspondant à la clef (230) engagée dans ledit agencement de douille à clef (220) et à l'unité électronique (310) actionnable pour activer des fonctions d'allumage de l'automobile ; et
(e) un cinquième état correspondant à la clef (230) engagée dans ledit agencement de douille à clef (220) et à l'unité électronique (310) actionnable pour activer des fonctions de mise en marche de moteur de l'automobile pour démarrer un moteur de l'automobile,
**caractérisé en ce que** ledit procédé comprend les étapes consistant à :
a) appuyer sur une ou plusieurs pédales de ladite automobile sur lesquelles l'utilisateur peut appuyer,
b) détecter un état dans lequel l'on appuie sur ladite ou lesdites pédales (280),
c) appuyer sur un interrupteur (240) dudit agencement d'interrupteur (240),
d) faire en sorte que ladite unité électronique (310) est actionnable pour être mise dans ledit cinquième état pour entraîner la mise en marche dudit moteur de ladite automobile, si l'étape a) a été suivie par l'étape c).

12. Procédé selon la revendication 11, dans lequel l'agencement d'interrupteur (240) comprend seulement un interrupteur unique (240) pour que l'utilisateur mette l'unité électronique (310) dans lesdits états mutuellement différents.

13. Procédé selon la revendication 11 ou 12, dans lequel un troisième état est sélectionné lorsque l'on appuie sur ledit interrupteur (240) pendant une période inférieure à une période seuil, et un quatrième état est sélectionné lorsque l'on appuie sur ledit interrupteur (240) pendant une période supérieure à ladite période seuil, ledit troisième état correspondant à l'activation de fonctions d'accès par l'utilisateur de l'automobile, et ledit quatrième état correspondant à l'activation de fonctions d'allumage de l'automobile.
